Europäisches Patentamt

European Patent Office

Office européen des brevets

(11) Veröffentlichungsnummer: **0 346 520 B1**

(12) **EUROPÄISCHE PATENTSCHRIFT**

(45) Veröffentlichungstag der Patentschrift: **19.08.92**

(21) Anmeldenummer: **88109708.3**

(22) Anmeldetag: **17.06.88**

(51) Int. Cl.5: **G06K 11/06**, G06F 3/033

(54) **Vorrichtung zur Eingabe von numerischen bzw. alphanumerischen Daten in ein Gerät.**

(43) Veröffentlichungstag der Anmeldung:
**20.12.89 Patentblatt 89/51**

(45) Bekanntmachung des Hinweises auf die
Patenterteilung:
**19.08.92 Patentblatt 92/34**

(84) Benannte Vertragsstaaten:
**FR GB IT**

(56) Entgegenhaltungen:
**DE-A- 3 204 428**

**PATENT ABSTRACTS OF JAPAN, Band 6,
Nr.79 (P-115)(957), 18. Mai 1982 ; & JP-
A-57014936 (TOKYO SHIBAURA DENKI KK),
26.01.1982**

**PATENT ABSTRACTS OF JAPAN, Band 7, Nr.
245 (P-233)(1390), 29. Oktober 1983 ; & JP-
A-58192643 (HITASHI SEISAKUSHO KK),
02.08.1983.**

**PATENT ABSTRACTS OF JAPAN, Band 8, Nr.
97 (P-272)(1534), 8. Mai 1984; & JP-
A-59009750 (TOKYO SHIBAURA DENKI KK),
19.01.1984**

(73) Patentinhaber: **Fresenius AG
Gluckensteinweg 5
W-6380 Bad Homburg v.d.H.(DE)**

(72) Erfinder: **Faeser, Ulrich, Dipl.-Ing.
Brunnenweg 2
W-6242 Kronberg 2(DE)**
Erfinder: **Polaschegg, Hans-Dietrich, Dr.
Grünwiesenweg 9
W-6370 Oberursel 4(DE)**
Erfinder: **Mahn, Dieter, Dipl.-Ing. (FH)
An den Brunnengärten 6
W-6380 Bad Homburg v.d. H.(DE)**

(74) Vertreter: **Dr. Fuchs, Dr. Luderschmidt
Dipl.-Phys. Seids, Dr. Mehler Patentanwälte
Abraham-Lincoln-Strasse 7
W-6200 Wiesbaden(DE)**

## Beschreibung

Die vorliegende Erfindung bezieht sich auf eine Vorrichtung, wie sie beispielsweise aus der DE-A-32 04 428 bekannt ist.

Die bekannte Vorrichtung dient der Steuerung einer Markierung (Cursor) auf einem Bildschirm. Hierbei wird aus einer Potentiometerverstellung durch einen Steuerknüppel nach entsprechender Analog/Digital-Umsetzung ein Digitalwert nach Betrag und Vorzeichen gebildet und einem Eingangsregister zugeführt. Das Vorzeichen ergibt die Zählrichtung von zwei Richtungszählern und der Betrag der Verstellung wirkt einstellend auf programmierbare Teiler, die - angesteuert von einem Taktgenerator - die Zähler ansteuern, so daß die Zählgeschwindigkeit durch die Größe des Digitalwertes vorgegeben ist. Bei der bekannten Vorrichtung wird ein Vergleich zwischen einer Soll- und einer Ist-Position der Markierung durchgeführt und bei Überschreitung eines Schwellwertes wird auf die Markierung verschiebend eingewirkt. Die Geschwindigkeit der Markierungsverschiebung ändert sich progressiv mit der Auslenkung des Steuerknüppels.

Bei der Eingabe von alphanumerischen Daten in medizintechnische elektromechanische Apparate ist es bislang nur bekannt, die Veränderung der einzugebenden Daten von der Auslenkung eines Betätigungselements oder von der Dauer der Betätigung des Elements abhängig zu machen.

Die Weg-Wirkungs-Beziehung bei der ersten Alternative ist aus anthropotechnischer Sicht optimal, da der Bediener der Vorrichtung automatisch den Betrag der Reaktion, d.h. die Größe des eingegebenen Wertes als Ergebnis seines Aktionsaufwandes fühlt.

Lediglich bei großen und trotzdem präzise einzugebenden Beträgen der Eingabedifferenz wird durch den damit verbundenen Betätigungsaufwand das anthropotechnische Optimum verlassen. Ordnet man andererseits durch entsprechende Auslegung der Vorrichtung noch zumutbar großen Stellbewegungen des Betätigungselementes große Eingabebetragsdifferenzen zu, so ist eine exakte Eingabe nicht mehr möglich.

Bei der zweiten Alternative ergibt sich eine quasi-stetige Funktion zwischen der Aktion des Bedienenden und der Apparatreaktion und über große Zahlenbereiche ist der Eingabeaufwand dem der stetigen Einsteller vergleichbar.

Schließlich sind nicht-stetig wirkende numerische Eingabevorrichtungen bekannt, wie beispielsweise Kodierschalter, bei denen jeder Dezimalzahl und somit pro Dekade ein Schaltelement zugeordnet ist. Hierbei ist eine stetige Funktion zwischen der Benutzeraktion und dem Betrag der neu einzugebenden Differenz nicht mehr gegeben, wodurch fehlerhafte Eingaben in ungleich höherem Maße auftreten können als bei stetig verstellbaren Einstellelementen. Dies bedeutet in anthropotechnischer Hinsicht eine Schwachstelle. Andererseits ist der Betätigungsaufwand ohne Verlust an Exaktheit vom Betrag der Eingabedifferenz nahezu unabhängig.

Ausgehend von dem eingangs genannten Stand der Technik ist es die Aufgabe der vorliegenden Erfindung, eine anthropotechnisch optimale Eingabevorrichtung für die Steuerung einer Anzeige zu schaffen. Die Lösung dieser Aufgabe gelingt gemäß den Merkmalen der Patentansprüche 1 und 2. Weitere vorteilhafte Ausgestaltungen der Erfindung sind den abhängigen Ansprüchen entnehmbar.

Die erfindungsgemäße Vorrichtung gestattet eine drastische Verkürzung der Eingabeprozedur auch bei großen Eingabedifferenzen dN, indem Schaltungsmittel vorgesehen werden, die die Anzeige und damit die Apparatereaktion $R_A$ sowohl von der Position dP des Eingabeelementes als auch von der Betätigungszeit dT des Eingabeelementes abhängig machen, d.h. die erfindungsgemäßen Schaltungsmittel verwirklichen folgende Beziehung:

$$dN = f\left[\bar{R}_A(dP), \, dT\right]$$

In dieser Gleichung entspricht dN der Differenz zwischen dem aktuellen Eingabewert und dem vorherigen Eingabewert. $R_A$ beschreibt eine Apparatereaktion und ist eine Funktion der Positionsdifferenz dP und dT entspricht der Betätigungszeit.

Eine diese Beziehung verwirklichende Eingabevorrichtung kombiniert das Verhalten des stetig verstellbaren Einstellelementes mit dem Verhalten des quasi-stetigen Einstellelementes, wobei die Apparatekonstante durch die variable Apparatereaktion ersetzt wird.

Aus der Eingabeaktion des Benutzers werden zwei Parameter, nämlich der Positionsdifferenz und der Betätigungszeit entsprechend abgeleitet. Dabei verändert sich die Differenz zwischen dem alten Eingabewert und dem aktuellen Eingabewert solange mit der Geschwindigkeit $R_A$, wie das Einstellelement betätigt wird, wobei $R_A$ eine stetige Positive Funktion der Positionsdifferenz der Einstellvorrichtung ist.

Die vorliegenden Erfindung kann prinzipiell mit digitalen und mit analogen Schaltungsmitteln verwirklicht werden. Vorzugsweise wird eine Totzone vorgegeben, innerhalb derer die Eingabevorrichtung auf geringere Auslenkungen des Betätigungselementes nicht reagiert.

Bei der analogen Verwirklichung arbeitet vorzugsweise ein Potentiometerabgriff auf einen Spannungs-/Frequenz-Umsetzer.

Bei der digitalen Verwirklichung steuert die abgegriffene Spannung nach Analog/Digital-Umsetzung die Voreinstelleingänge eines voreinstellbaren Zählers an. In beiden Fällen wird eine Potentiometerwiderstand zwischen unterschiedlichen Spannungen betrieben. Der Potentiometerabgriff wird durch eine oder mehrere Federn in der Mittellage gehalten, so daß in der Ausgangsstellung und Ruhelage des Potentiometerabgriffes eine Spannung von Null Volt ausgegeben wird. Die Totzone läßt sich bei der analogen Verwirklichung durch ein Diodennetzwerk vorgeben, während bei der digitalen Verwirklichung die Totzone durch eine Subtraktion einer kleinen digitalen Zahl von der durch den Analog/Digital-Umsetzer ausgegebenen Digitalzahl erzielt wird.

Anhand von in den Figuren der beiliegenden Zeichnung dargestellten Ausführungsbeispielen sei im folgenden die erfindungsgemäße Einstellvorrichtung näher erläutert.

Es zeigen:

Fig. 1 eine im wesentlichen digital arbeitende Eingabevorrichtung; und

Fig. 2 eine im wesentlichen analog arbeitende Eingabevorrichtung.

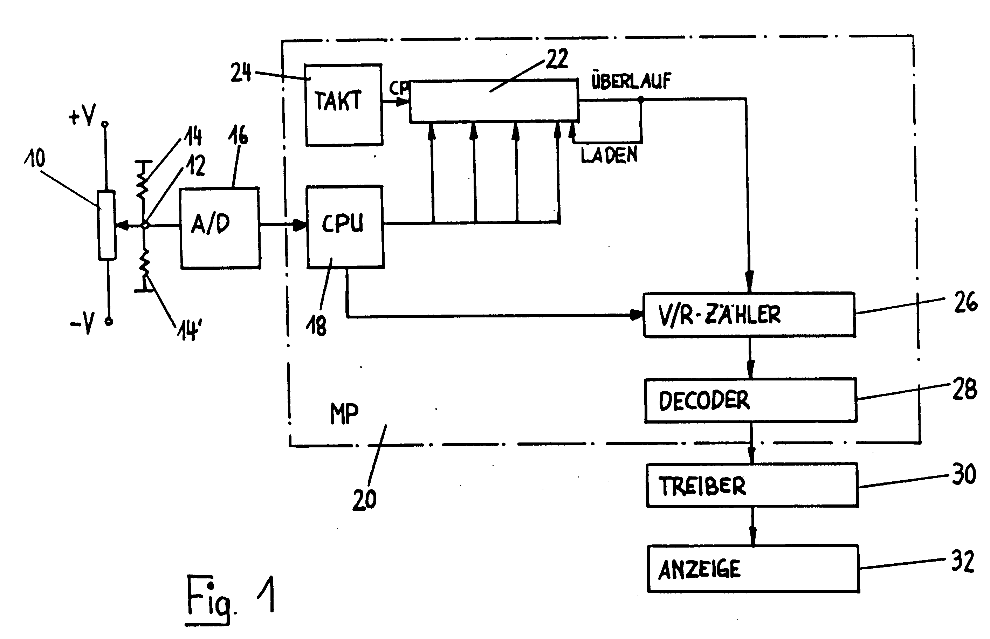

Gemäß Fig. 1 wird ein Potentiometerwiderstand 10 zwischen gleichgroßen positiven und negativen Spannungen +V und -V betrieben. Der Abgriff 12 des Potentiometerwiderstandes 10 ist durch Federn 14, 14′ in seiner Mittellage festgehalten, so daß bei einer Verbindung des Abgriffes 12 mit einem nicht-dargestellten Drehknopf dieser in seine Ausgangslage zurückgeführt wird, wenn er losgelassen wird. Die schematisch angedeuteten Federn 14,14′ können auch z.B. durch eine einzige Schenkelfeder ersetzt werden.

Die von dem Potentiometer 10, 12 abgegriffene Spannung wird einem Analog/Digital-Umsetzer 16 zugeführt, der die abgegriffene Spannung in einen Digitalwert mit einer Breite von mehreren Bit umsetzt. Dieser Digitalwert wird, versehen mit einem Vorzeichen, in Abhängigkeit von der Auslenkungsrichtung des Potentiometerabgriffes 12 einer Subtrahierschaltung 18 zugeführt, die von dem Digitalwert einen geringen Digitalwert subtrahiert, um eine Totzone vorzugeben, innerhalb derer bei geringer Auslenkung des Potentiometerabgriffes 12 keine Verstellung der Digitalanzeige erfolgt. Die Subtrahierschaltung 18 kann hierbei durch die Zentraleinheit CPU eines Mikroprozessors 20 vorgegeben sein, der in der üblichen nicht-dargestellten Weise mit einem Speicher mit wahlfreiem Zugriff RAM und einem Programm-Festwertspeicher ROM versehen ist.

Der in der erwähnten Weise rechnerisch behandelte Digitalwert wird auf die Voreinstelleingänge eines voreinstellbaren Zählers 22 gegeben, der an seinem Takteingang CP von den Taktimpulsen eines Taktgenerators 24 beaufschlagt wird. In Abhängigkeit von seiner Voreinstellung läuft der Zähler 22 mehr oder weniger schnell über, wobei jeder Überlaufimpuls einmal benutzt wird, um den Zähler 22 mit dem von der Subtrahiereinrichtung ermittelten Digitalwert neu voreinzustellen und zum anderen benutzt wird, um der Zähleingang eines Vor/Rückwärts-Zählers 26 zu beaufschlagen. Die Zählrichtung des Vor/Rückwärts-Zählers 26 wird von der Subtrahiereinrichtung 18 in Abhängigkeit davon vorgegeben, ob ein positiver oder negativer Digitalwert vorliegt. Der Vor/Rückwärts-Zähler 26 steuert über Dekoderschaltkreise 28 und Treiberschaltkreise 30 eine Anzeige 32 an.

Die Subtrahiereinrichtung 18, d.h. die Zentraleinheit CPU, der voreinstellbare Zähler 22, der Taktgenerator 24, der Vor/Rückwärts-Zähler 26 und die Dekodierschaltkreise 28, sind innerhalb eines handelsüblichen Mikroprozessors 20 realisiert.

Man erkennt, daß - beginnend mit einer bestimmten Verstellung des Potentiometers - die Anzeige 32 mehr oder weniger schnell verstellt wird, wobei diese Verstellung von der Auslenkung des Potentiometers und der Dauer der Auslenkung abhängig ist.

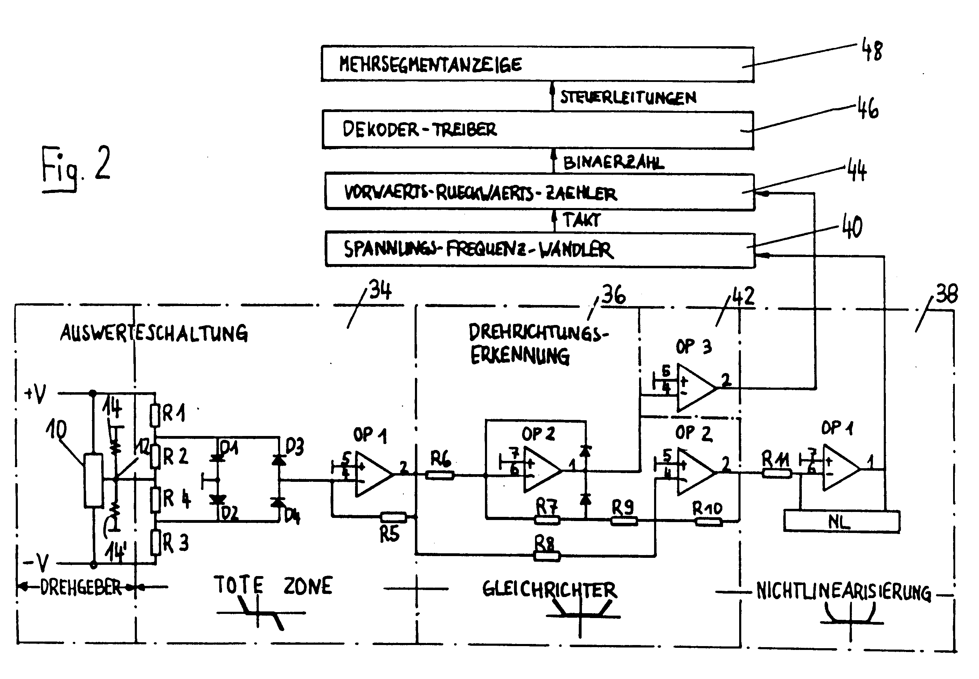

Gemäß Fig. 2 ist wiederum ein Potentiometerwiderstand 10 zwischen gleichgroßen positiven und negativen Spannungen +V und -V angeordnet. Der Abgriff 12 des Potentiometerwiderstandes 10 ist in der gleichen Weise durch Federn 14, 14′ in seiner Mittellage gehalten, so daß auch hier bei einer Verbindung des Abgriffes 12 mit einem nicht-dargestellten Drehknopf dieser in seine Ausgangslage zurückgeführt wird, wenn er losgelassen wird.

Über ein Totzonenglied 34, das eine an einen Spannungsteiler angeschlossene Dioden-Brückenschaltung und einen nachgeschalteten Operationsverstärker umfaßt, wobei die an dem Spannungsteiler abgegriffene Spannung von der Stellung des Potentiometers 10, 12 beeinflußt wird, wird eine Totzone vorgegeben, innerhalb der eine Änderung der Potentiometerstellung ohne Einfluß bleibt. Beginnend mit einer bestimmten Verschiebung des Potentiometerabgriffes 12 steigt sodann die Spannung am Ausgang des Totzonengliedes linear an bzw. fällt linear ab. Der negative Zweig der abgegriffenen Spannung wird in einem Gleichrichter 36 gleichgerichtet und dem positiven Ast additiv überlagert. Die zusammengesetzte Spannung wird normalerweise einem Spannungs-/Frequenz-Umsetzer VCO-40 direkt zugeführt. Optional kann ein nicht-lineares Glied 38 noch zwischen dem Gleichrichter 36 und dem Spannungs-/Frequenz-Umsetzer 40 vorgesehen sein, um der dem Spannungs-/Frequenz-Umsetzer 40 zugeführten Eingangsspannung ein nicht-lineares Verhalten aufzuprägen.

Ein das Vorzeichen der abgegriffenen Spannung ermitteIndes Glied 42 ist zwischen des Totzonenglied 34 und einen Vor/Rückwärts-Zähler 44 geschaltet, um diesem Zähler vorzeichenabhängig die Zählrichtung vorzugeben. Der Zählereingang des Zählers 44 wird von dem Spannungs-/Frequenz-Umsetzer VCO-40 beaufschlagt. Der Vor/Rückwärts-Zähler 44 beaufschlagt seinerseits über Dekoder-/Treiberschaltkreise 46 die Anzeige 48.

Das Totzonenglied 34, der Gleichrichter 36, das die Signumfunktion verwirklichende Glied 42 und das nicht-lineare Kennlinienglied 38 können jeweils durch entsprechend beschaltete Operationsverstärker realisiert werden, wie dies dem Fachmann bekannt ist. Ebenso empfiehlt es sich, zur Entkopplung zwischen dem Potentiometer abgriff und dem Totzonenglied 34, einen 1:1-Operationsverstärker vorzusehen.

Man erkennt auch hier, daß - beginnend mit einer bestimmten Verstellung des Potentiometers - die Anzeige 48 mehr oder weniger schnell verstellt wird, wobei diese Verstellung von der Auslenkung des Potenmtiometers und der Dauer der Auslenkung abhängig ist.

Die Bedienung der erfindungsgemäßen Einstellvorrichtung ist denkbar einfach. Je weiter der Benutzer das Einstellelement, d.h. das Potentiometer aus seiner Mittenlage entfernt, um so schneller wird der Zieleinstellwert angefahren. Nähert sich der jeweils aktuelle Wert dem Zieleinstellwert, so kann der Benutzer die Entfernung von der Mittenlage und damit die Änderungsgeschwindigkeit des jeweils aktuellen Wertes so weit reduzieren, bis ein kommodes Einlaufen in den Zieleinstellwert erreicht ist. Ein eventuelles Überfahren des Zieleinstellwertes kann durch eine Umkehrung der Entfernungsrichtung aus der Mittenlage korrigiert werden. Die Wirkung der Einstellvorrichtung ist der eines Gaspedals eines Kraftfahrzeuges vergleichbar. Selbst nahezu beliebig große Differenzen zwischen dem vorherigen Eingabewert und dem Zieleingabewert werden durch maximale Auslenkung des Einstellelementes in Kürze überbrückt und in der Schlußphase des Einstellvorganges besteht die Möglichkeit, den Zieleinstellwert präzise anzufahren.

**Patentansprüche**

1. Vorrichtung zum Steuern der Anzeige (32) eines Gerätes, insbesondere von medizintechnischen elektromechanischen Apparaten mit Schaltungsmittel zur Veränderung der Anzeige (32) in Abhängigkeit von der Größe und Richtung der Verstellung eines mit einem Abgriff (12) versehenen Widerstands-Eingabeelementes (10) sowie mit einem an den Abgriff (12) angeschlossenen Analog/Digital-Umsetzer (16) und einer nachgeschalteten Digitalschaltung, welche umfaßt:
   a) einen voreinstellbaren Zähler (22), dessen Voreinstelleingänge an den Ausgang des Analog/Digital-Umsetzers (16) angeschlossen sind, dessen Zähleingang an einen Taktgenerator (24) angeschlossen ist und dessen Überlaufausgang an einen Ladeeingang des voreinstellbaren Zählers (22) angeschlossen ist; und
   b) einen Vor/Rückwärts-Zähler (26), der an den Überlaufausgang des voreinstellbaren Zählers (22) angeschlossen ist und über Dekodier- und Treiberschaltkreise (28, 30) die Anzeige (32) steuert, wobei die Anzeige (32) aus einer rein alphanumerischen Anzeige besteht.

2. Vorrichtung zum Steuern der Anzeige (48) eines Gerätes, insbesondere von medizintechnischen elektromechanischen Apparaten mit Schaltungsmitteln zur Veränderung der eingegebenen Daten in Abhängigkeit von der Größe und Richtung der Verstellung eines mit einem Abgriff (12) versehenen Widerstands-Eingabeelementes (10), gekennzeichnet durch folgende Merkmale:
   a) Der Abgriff (12) ist über ein Totzonenglied (34) und einen Gleichrichter (36) an einen Spannungs-/Frequenz-Umsetzer (VCO-40) angeschlossen; und
   b) der Spannungs-/Frequenz-Umsetzer (VCO-40) steuert einen Vor/Rückwärts-Zähler (44) an, welcher seinerseits über Dekodier- und Treiberschaltkreise (46) die Anzeige (48) ansteuert, wobei die Anzeige (48) aus einer rein alphanumerischen Anzeige besteht.

3. Vorrichtung nach Anspruch 1, dadurch gekennzeichnet, daß zwischen Analog/Digital-Umsetzer (16) und voreinstellbarem Zähler (22) eine Subtrahierschaltung (CPU-18) angeordnet ist, um von dem jeweils umgesetzten Digitalwert einen vorgebbaren Digitalwert zu subtrahieren und eine Totzone vorzugeben, innerhalb derer die Verstellung des Widerstands-Eingabeelementes zu keiner Veränderung der Anzeige führt.

4. Vorrichtung nach Anspruch 2, gekennzeichnet durch ein das Vorzeichen der abgegriffenen Spannung feststellendes Glied (42), dessen Ausgang auf den Richtungseingang des Vor/Rückwärts-Zählers (44) geschaltet ist.

5. Vorrichtung nach Anspruch 4, gekennzeichnet durch ein Glied (38) zwischen dem Gleichrichter (36) und dem Spannungs-/Frequenz-Umsetzer (VCO-40) zur Vorgabe eines nicht-linearen Verlaufes der abgegriffenen gleichgerichteten Spannung.

6. Vorrichtung nach Anspruch 3, dadurch gekennzeichnet, daß die Subtrahierschaltung (CPU-18) zugleich ein Vorzeichensignal an den Richtungseingang des Vor/Rückwärts-Zählers (26) liefert.

7. Vorrichtung nach Anspruch 3, gekennzeichnet durch die Verwendung eines Mikroprozessors (20).

8. Vorrichtung nach Anspruch 5, gekennzeichnet durch beschaltete Operationsverstärker zur Verwirklichung der Gleichrichterfunktion, der Signumfunktion und der nicht-linearen Funktion.

**Claims**

1. Device for controlling the display (32) of an apparatus, in particular of medical electromedical apparatuses comprising circuit means for changing the display (32) in dependence from the value and the direction of the displacement of a resistive input element (10) having a tap (12) with said tap (12) being connected to an analog/digital converter (16) and a digital circuit connected in series which digital circuit comprises:
   a) a presettable counter (22) having connected its presetting inputs to the output of said analog/digital converter (16), its counting input to a clock generator (24) and its overflow output to a load input of said presettable counter (22); and
   b) an up/down counter (26) being connected to the overflow output of said presettable counter (22) and controlling via decoding and driver circuits (28, 30) a display (32), whereby the display (32) consists of a mere alphanumerical display.

2. Device for controlling the display (48) of an apparatus, in particular of medical electromechanical apparatuses, comprising circuit means for changing the inputted data in dependence from the value and the direction of the displacement of a resistive input element (10) having a tap (12), characterized by the following features:
   a) the tap (12) being connected via a dead zone member (34) and a rectifier (36) to a voltage/frequency converter (VCO-40); and

b) the voltage/frequency converter VCO-40 is feeding an up/down counter (44) which controls via decoding and driver circuits (46) a display (48), whereby the display (48) consists of a mere alphanumerical display.

3. Device according to claim 1, characterized in that between said analog/digital converter (16) and said presettable counter (22) a subtracting circuit (CPU-18) is provided serving to subtract from each converted digital value a predeterminable digital value and to provide a dead zone in which the displacement of the resistive input element results in no change of the display.

4. Device according to claim 2, characterized by means (42) for evaluating the sign of the tapped voltage with the output of said means being connected to a direction input of said up/down counter (44).

5. Device according to claim 4, characterized by means (38) arranged between the rectifier (36) and the voltage/frquency converter (VCO-40) for providing a non-linear behavior of the tapped and rectified voltage.

6. Device according to claim 3, charaterized in that the subtracting circuit (CPU-18) at the same time delivers a sign signal to the direction input of said up/down counter (26).

7. Device according to claim 3, characterized by the use of a microprocessor (20).

8. Device according to claim 5, characterized by wired-up operational amplifiers for implementing the rectifying function, the sign function and the non-linear function.

**Revendications**

1. Dispositif de commande de l'affichage (32) d'un appareil, en particulier d'appareils électromécaniques médicaux, avec des moyens de commutation pour faire varier l'affichage (32) en fonction de la grandeur et du sens du déplacement d'un élément d'introduction à résistance, pourvu d'une prise (12), et avec un convertisseur analogique/numérique (16) connecté à la prise (12) et un circuit numérique monté en aval, comportant :
   a) un compteur (22) à présélection dont les entrées de présélection sont connectées à la sortie du convertisseur analogique/numérique (16), dont l'entrée de comptage est connectée à une horloge (24) et dont la sortie de dépassement est connectée à une entrée de charge du compteur (22) à présélection ; et

b) un compteur positif/régressif (26) qui est connecté à la sortie de dépassement du compteur (22) à présélection et qui commande l'affichage (32) par des circuits de décodage et d'attaque (28, 30), l'affichage (32) étant constitué d'un affichage purement alphanumérique.

2. Dispositif de commande de l'affichage (48) d'un appareil, en particulier d'appareils électromécaniques médicaux, avec des moyens de commutation pour faire varier l'affichage (32) en fonction de la grandeur et du sens du déplacement d'un élément d'introduction à résistance, pourvu d'une prise, caractérisé par les caractéristiques suivantes :

a) la prise (12) est connectée, par un organe de zone morte (34) et un redresseur (36), à un convertisseur tension/fréquence (VCO-40) ; et

b) le convertisseur tension/fréquence (VCO-40) commande un compteur positif/régressif (44) qui, de son côté, commande l'affichage (48), par des circuits de décodage et d'attaque (46), l'affichage (48) étant constitué d'un affichage purement alphanumérique.

3. Dispositif selon la revendication 1, caractérisé en ce qu'il est monté, entre le convertisseur analogique/numérique (16) et le compteur à présélection (22), un circuit de soustraction (CPU-18), afin de soustraire une valeur numérique donnée, de la valeur numérique convertie et d'imposer une zone morte, à l'intérieur de laquelle le déplacement de l'élément d'introduction à résistance n'entraîne aucune variation de l'affichage.

4. Dispositif selon la revendication 2, caractérisé par un organe (42) fixant le signe de la tension prélevée, dont la sortie est connectée à l'entrée de sens du compteur positif/régressif (44).

5. Dispositif selon la revendication 4, caractérisé par un organe (38) entre le redresseur (36) et le convertisseur tension/fréquence (VCO-40), en vue d'imposer un parcours non linéaire de la tension redressée prélevée.

6. Dispositif selon la revendication 3, caractérisé en ce que le circuit de soustraction (CPU-18) fournit en même temps un signal de signe à l'entrée de sens du compteur positif/régressif (26).

7. Dispositif selon la revendication 3, caractérisé par l'utilisation d'un microprocesseur (20).

8. Dispositif selon la revendication 5, caractérisé par le montage d'amplificateurs opérationnels, afin de réaliser la fonction de redresseur, la fonction signe et la fonction non linéaire.

Fig. 1

EP 0 346 520 B1

Fig. 2

MEHRSEGMENTANZEIGE — 48

STEUERLEITUNGEN

DEKODER-TREIBER — 46

BINAERZAHL

VORWAERTS-RUECKWAERTS-ZAEHLER — 44

TAKT

SPANNUNGS-FREQUENZ-WANDLER — 40

34 — AUSWERTESCHALTUNG

36 — DREHRICHTUNGS-ERKENNUNG

42 — 38

+V

10   14   12

R1   R2   R4   R3

D1   D3   D2   D4

OP 1

R6   R5

OP 2   R7   R9   OP 3   OP 2   R10   R11   OP 1

R8

NL

-V   14'

DREHGEBER

TOTE ZONE

GLEICHRICHTER

NICHTLINEARISIERUNG

EP 0 346 520 B1